(19) Europäisches Patentamt
European Patent Office
Office européen des brevets

(11) **EP 2 477 154 B1**

(12) **EUROPEAN PATENT SPECIFICATION**

(45) Date of publication and mention
of the grant of the patent:
**24.08.2016 Bulletin 2016/34**

(51) Int Cl.:
***G06T 7/00*** *(2006.01)*    ***G06T 5/00*** *(2006.01)*
***G06T 5/20*** *(2006.01)*

(21) Application number: **12000171.4**

(22) Date of filing: **13.01.2012**

(54) **Noise assessment method for digital X-ray films**

Rauschbemessungsverfahren für digitale Röntgenfilme

Procédé d'évaluation du bruit pour films numériques à rayons x

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.01.2011 RU 2011101471**

(43) Date of publication of application:
**18.07.2012 Bulletin 2012/29**

(73) Proprietor: **ZAO "IMPULS"**
**197343 St. Petersburg (RU)**

(72) Inventor: **Merkurev, Sergey V.**
**198259 Sankt Petersburg (RU)**

(74) Representative: **Jeck, Anton et al**
**Klingengasse 2**
**71665 Vaihingen/Enz (DE)**

(56) References cited:
**US-A- 5 923 775**

• **MARCELLO SALMERI ET AL: "Signal-dependent
Noise Characterization for Mammographic
Images Denoising", 16TH IMEKO TC4
SYMPOSIUM, 24 September 2008 (2008-09-24),
XP055057940, Florence, ITALY**
• **MARC HENSEL ET AL: "Robust and Fast
Estimation of Signal-Dependent Noise in Medical
X-Ray Image Sequences", BILDVERARBEITUNG
FÜR DIE MEDIZIN 2006, 21 March 2006
(2006-03-21), pages 46-50, XP055057832, Berlin
Heidelberg DOI: 10.1007/3-540-32137-3_10 ISBN:
978-3-54-032137-8**
• **H. FARAJI ET AL: "CCD noise removal in digital
images", IEEE TRANSACTIONS ON IMAGE
PROCESSING, vol. 15, no. 9, 1 September 2006
(2006-09-01), pages 2676-2685, XP055058122,
ISSN: 1057-7149, DOI: 10.1109/TIP.2006.877363**

**Description**

FIELD OF THE INVENTION

The present invention relates to digital image processing, can be used to solve problems concerning processing of digital images obtained with the use of high - energy radiation including the X-rays. The present invention relates in particular to noise assessment of digital X-ray films.

BACKGROUND

At the present time various image processing algorithms have been used in digital radiography. Examples are disclosed in M. Salmeri et al: "Signal-dependent Noise Characterization for Mammographic Images Denoising", 16th IMEKO TC4 Symposion, 24 September 2008, and in M. Hensel et. al.: "Robust and Fast Estimation of Signal-Dependent Noise in Medical X-Ray image Sequences", Bildverarbeitung fur die Medizin 2006, 21 march 2006, pp. 46-50.

Such methods as crispening or anatomical organization segmentation can use image noise level data. Moreover, in fact every qualitative noise - suppression method uses noise dispersion as a parameter. Therefore, the following problem is important to be considered: having a digital original image only to determine noise level of that image. This problem becomes complicated by the fact that the noise dispersion of the digital image considerably depends on useful signal intensity.

Noise is usually meant a random deviation of a measured quantity of any unit from its accurate value. In digital radiography the imaging detector measures X-ray intensity- every cell operates as a photon summator, collecting within the exposure time at the average $\overline{N}$ electrons by the means of photon absorption. $N$ - collected in the detector cell within the exposure time electrons generated during a photon absorption process can be simulated by the use of a Poisson distributed random quantity

$$P\big(N=n\big)=\exp(-\overline{N})\frac{\overline{N}^n}{n!}\quad,n\geq 0\ .$$

Random fluctuations of absorbed photons are called quantum noise or photon noise. In modern detectors photon noise is a main source of image noise. Supplementary noise sources relate to noise of a detector system: read-out noise, heat noise, noise of amplifiers, quantization noise etc [5]. The overall effect of the given noise sources can be modeled by Gaussian distributed random quantity [1 - 3]. According to the conventional model in linear electronic circuits the dispersion of overall noise of digital image (photon noise and supplementary noise sources) is a linear function of the useful signal [11]:

$$\sigma^2\big(I(p)\big)=a\,I(p)+b\,,\qquad\qquad(1)$$

where $I(p)$ - signal intensity level in the pixel $p$.

There are a lot of published works [1, 3, 4, 6 - 8, 10] devoted to the problem of digital image assessment in terms of noise. So, the paper [6] offers a non-parametric noise assessment method, where the main accent is focused on developing a real-time algorithm.

A two-parametric approach to noise assessment is considered in the paper [3]. Noise of raw-data digital image (obtained directly from the imaging detector and not having undergone non-linear transforms such as gamma-correction etc.) is modeled as an additive in relation to a signal random value the dispersion of which depends on the signal according to the law (1). This method of plotting model noise dispersion curves takes into account nonlinearity in detector operation resulted in under-and-overexposure i.e. at violation of the law (1) at the boundaries of dynamic range.

SUMMARY OF THE INVENTION

The invention is set out in the appended claims.

The method, most closely related to this claim is the method represented in papers [2, 6], according to which an estimation of the signal-dependent noise over the original image is enough to execute the following stages:

- To estimate the useful signal by means of low-frequency filtering of the raw-data digital image and calculate the difference between the original image and its estimation having obtained thereby noise image;

- To exclude with the use of any method pixel values having noise image that correlate with sharp changes (boundaries, single "hot" pixels) in the raw-data digital image;
- To split the intensity range of the estimated image into intervals, then for each interval to store pixels of noise image that correspond to the pixels of the estimated image;
- To calculate noise dispersion in every interval on the base of stored in such an interval pixel values of noise image.

The present invention uses noise estimation principles stated in above mentioned papers. The task of the claimed invention is to develop a method being more efficient in terms of rate and quality of the digital x-ray image noise estimation. The technical **result** in the claimed noise assessment method for digital X-ray films including :

obtaining an original image; obtaining an estimated image by means of low-frequency filtering of the original image; creating the signal-dependent noise as a difference between the raw-data digital image and its estimation; excluding pixel values having noise image, corresponded to the sharp changes in raw-data digital image; splitting the intensity range of the estimated image into intervals, where each pixel of the estimated image belongs to the appropriate interval; storing for each interval pixels of noise image that correspond to the pixels of the estimated image; calculating noise dispersion in every interval on the base of stored in such an interval pixel values of noise image; elaborating dispersion in every interval by means of excluding noise pixels using σ 3 approach, is **achieved** by the following means:

- pixel values having noise image, correlated with the sharp changes in raw-data digital image are excluded by means of morphological extraction of pixel values having noise image, corresponding to the edges of original image;

- it is executed a robust local linear approximation of interval estimations of noise dispersion that results in a tabular function providing noise dependence on signal intensity;

- on the base of the estimated image and computed tabular function they calculate a noise map looking like an image being pixel-by-pixel estimation of original image noise dispersion.

The algorithm execution comprises several stages:

1. estimation of the useful signal with the use of low-frequency filtering of the raw-data digital image and acquisition of the noise image by calculating a difference between the original image and its estimation;

2. morphological extraction of pixel values having noise image, corresponding to the edges of raw-data digital image;

3. Splitting the intensity range of the estimated image into intervals and calculating noise dispersion for each such interval on the base of stored in this interval pixels of noise image;

4. elaborating dispersion in each interval by means of excluding noise pixels on the base of σ 3 approach;

5. a robust local linear approximation of interval estimations of noise dispersion for computing a table function providing noise dependence on signal intensity;

6. calculating a noise map based on estimated image and determined tabular dependence between noise and intensity.

BRIEF DESCRIPTION OF THE DRAWINGS

The accompanying drawings illustrate the invention and, together with the written description, serve to explain the principles of the invention. Wherever possible, the same reference numbers are used throughout the drawings to refer to the same or like elements of an embodiment, and wherein:

FIG. 1    shows a device to obtain an x-ray film;
FIG. 2    shows a fragment of an actual x-ray film;
FIG. 3    show the map of borders (non-noise pixel);
FIG. 4    shows table function plot;

FIG. 5    shows a noise map.

DETAILED DESCRIPTION OF THE INVENTION

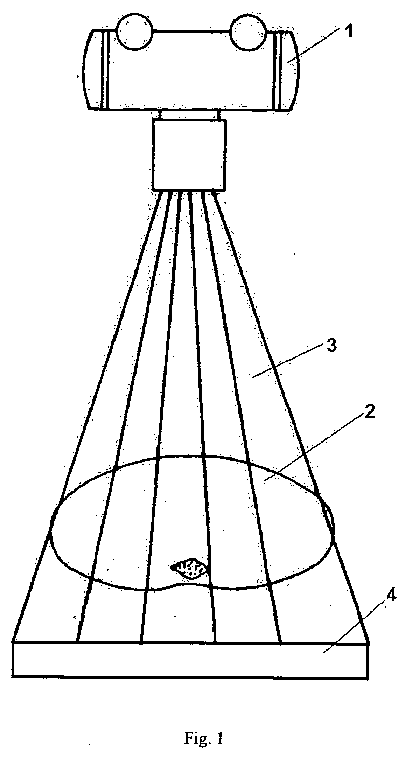

One of the possible variant to obtain an x-ray film is executed with the use of the device shown in Fig.1. The device comprises an x-ray tube 1 that develops an x-ray beam 3. The x-ray beam 3 passes through the object 2, being under an x-ray examination. X-rays are perceived by the detector 4. The detector 4 comprises an X-ray luminescent screen and a matrix of photosensitive elements. The named screen is optically connected with the active part of the photosensitive surface. The incident radiation 3 is firstly converted in luminescent layer into visible light, the intensity of which is registered by the matrix of photosensitive elements. Digital data is read out from the matrix of photosensitive elements and displayed on a monitor as an image.

At the stage of estimated image creation and noise image obtaining the useful signal estimation of the original image is executed for instance with the use of low-frequency filtering of the original image (linear low-frequency convolution, median filtering etc.) [2, 6]. To provide strict requirements to the execution speed in real-time applications, it is reasonable to use the simplest linear filtering (for instance, binomial filter). Using the obtained smoothed image a noise image is developed- the difference between the original - and filtered images.

Estimation by means of simplest filters is not ideal - the edges proved over-smoothed. As a result, the difference between the original - and smoothed images gives a noise image comprising besides noise pixels in smooth areas a certain number of pixels corresponding to sharp changes (anatomical organization outlines - hereinafter, non-noise pixels). These pixels should be excluded when calculating noise statistics, since they can considerably distort noise dispersion value. For this purpose are used different methods [3,8] coming, as a rule, to thresholding smoothed derivative from the original image, and threshold value is determined by signal-to-noise local estimation. Such estimation proves unsatisfactory in the image areas containing a great number of details. That is why at the stage of detection and elimination of edges the present invention offers an easier approach to select edges that does not require to calculate the derivatives and local estimations of standard deviations. The essence of this morphological approach to eliminate the non-noise pixels is as follows:

> 1. noise image is split into two components - binary images of positive and negative changes;
> 2. in order to select areas corresponding to the edges the obtained images are undergone morphological operations such as erosion and dilation;
> 3. processed images have been combined to obtain one binary image- outline map of the original image.

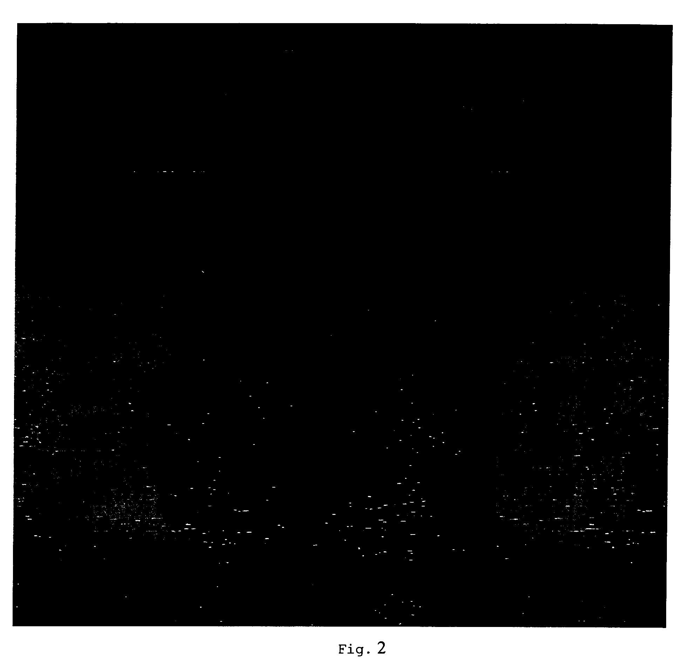

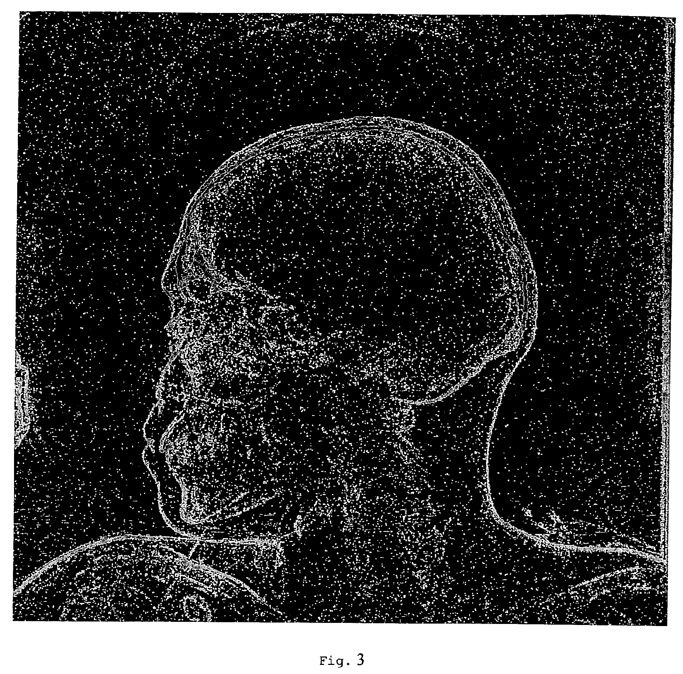

Aimed at more complete storing thin structures the morphological operations of erosion and dilation are performed with the use of masks of small size (window 2 x 2). Fig. 3 shows a binary image obtained by means of stated here approach to edge evaluation of a real radiological image displayed in Fig. 2.

At the stage of interval estimation of noise dispersion we calculate minimal and maximum intensity of the estimated image (intensity range limits), select a splitting pitch equal, for instance, to 32 grayscale gradations. Further, for each pixel of the estimated image we find an interval which this pixel value belongs to and corresponding pixel value of noise image we use to calculate noise dispersion evaluation in the given interval (simultaneously excluding pixels corresponding to boundaries). When calculating the interval estimation of noise dispersion different formulas can be used, for instance, a standard unbiased estimation, or robust estimation using the equation for the median of the absolute deviation [2, 3, 6]. This procedure results in a tabular function representing a dependence of noise dispersion on signal intensity.

Inaccuracies, appearing at edges' map creation are an obstacle for precise exclusion of non-noise pixels from estimation of statistics, what can lead to gross errors at calculating interval estimations of the dispersion. Therefore in the stage of improving interval estimation of the dispersion the estimation data are improved by means of iterative outlier removal technique [6]: for each interval are iteratively excluded noise pixels absolute values of which exceed a threshold equal to three standard noise deviations with the subsequent recalculation of noise dispersion estimation in this interval.

After the interval estimations of the noise dispersion have been calculated, the stage of estimation of the dependence of noise dispersion on signal intensity comes. When parametric evaluation, the noise model parameters (1) can be estimated by any method (for instance, method of the least squares, minimization of the likelihood function, directive optimization). Nonlinearity of the sensor can also be taken into account [2]. However, as it is mentioned in the paper [6], creation of parametrical model, that sufficiently describes the relationship between noise dispersion and signal intensity may result in serious difficulty because of many factors. These factors may include nonlinearity of the sensor, nonlinear pre-processing of the original image data (e.g., taking the logarithm). Therefore, in terms of ease of implementation and application versatility the approach at which based on the interval estimations the nonparametric estimation of the dependence of noise dispersion on signal intensity appears more beneficial.

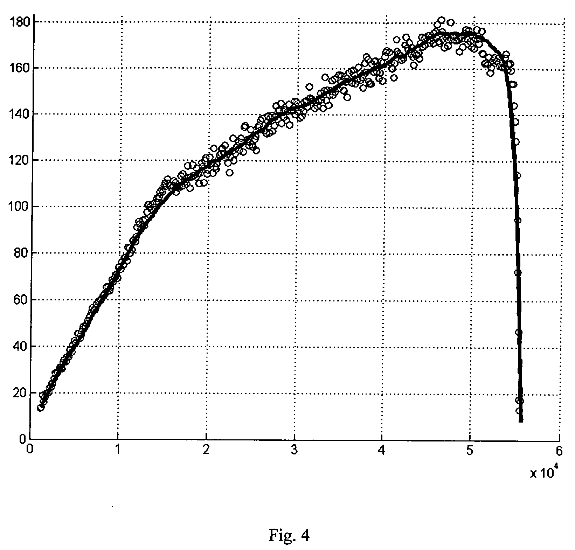

In the present invention, to create a required dependence it is provided a non-parametric approach at which based on obtained interval estimations of the noise dispersion an interpolating tabular function is developed. This tabular function is created on the base of robust local linear approximation of the interval estimations of the noise dispersion. The utilization of robust techniques additionally allows reducing outlier effect (gross errors in the interval estimations of the noise dispersion), while the locality of the approximation provides iteration of complex trend of the curve describing dependence of noise on intensity. Thus, obtained tabular function for each intensity of the original image matches an estimation of the noise dispersion. Tabular input points may use e.g. the intensities of an estimated image. Fig. 4 shows a plot of a tabular function (solid line), representing the dependence of standard noise deviation on intensity based on interval estimations of the standard noise deviation (circles) of the image shown in Fig. 2. Along X-axis - signal intensity values of the image shown in Fig. 2, Along Y-axis - standard noise deviation values corresponding to a given intensity value.

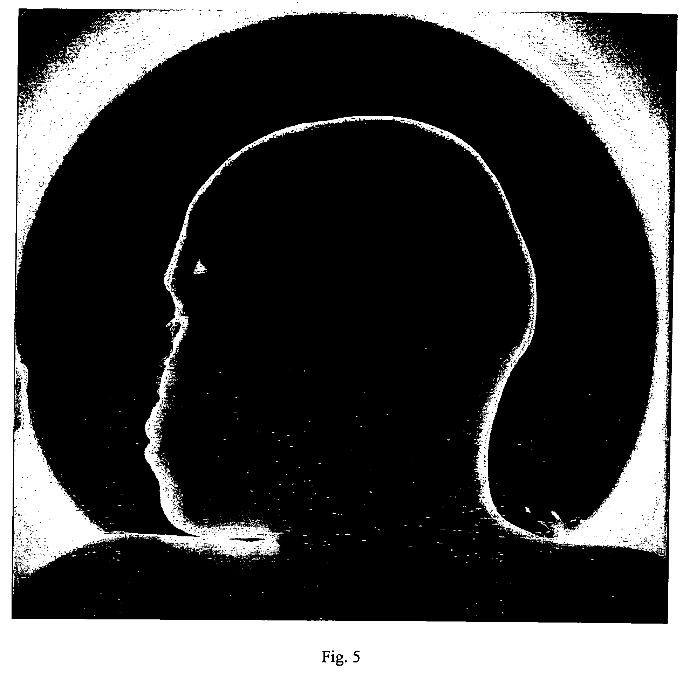

In practice, in case of parametric noise estimation there may be used an approach at which a transform stabilizing the noise dispersion of the original image is used [2, 3, 9, 11]. Herewith the problem of signal-dependent noise filtering comes to the task to suppress an additive noise-independent dispersion constant (given). The present claim provides nonparametric noise estimation, therefore, it is offered to use at the stage of noise map creation the following approach: using the estimated image and interpolating table a noise map is created - an image each pixel of which estimates a mean square value of noise deviation in the appropriate pixel of the original image. The noise map provides pixel-by-pixel noise estimation with the accuracy sufficient for practice. Using as more as possible precise data of image noise level provides considerably improved noise reduction algorithms. Fig. 5 shows a noise map-the image each pixel of which provides the estimation of noise standard.

## BEST EMBODIMENT OF THE INVENTION

At the stage of estimated image creation and noise image obtaining the original image $I(x, y)$ undergoes filtering by means of low-frequency linear binomial filter of size 3x3:

$$H_1 = \begin{bmatrix} 1 & 2 & 1 \end{bmatrix}/4, \quad H = H_1^T \cdot H_1 .$$

Herewith the smoothed image $I_e(x, y) = I * H$ is obtained. Further the noise image $N_e(x, y) = I(x, y) - I_e(x, y)$ is calculated.

At the stage of edges' removal using the noise image $N_e(x, y)$, two images of positive and negative changes are formed

$$N_e^-(x, y) = \begin{cases} 1, & N_e(x, y) < 0 \\ 0, & N_e(x, y) >= 0 \end{cases},$$

$$N_e^+(x, y) = \begin{cases} 1, & N_e(x, y) > 0 \\ 0, & N_e(x, y) <= 0 \end{cases}.$$

To select large areas corresponding to the edges binary image data sequentially undergo morphologic operations of erosion and dilatation with the use of masks of size 2x2:

$$B_e^-(x, y) = dilate_{[2x2]}\left(erode_{[2x2]}\left(N_e^-(x, y)\right)\right),$$

$$B_e^+(x, y) = dilate_{[2x2]}\left(erode_{[2x2]}\left(N_e^+(x, y)\right)\right).$$

Then, these images are combined to obtain the edge's map of the original image

$$E(x,y) = B_e^-(x,y) \cap B_e^+(x,y).$$

The stage of interval estimations of the noise dispersion involves: calculation of minimal $I_{min}$ and maximum $I_{max}$ intensities of the image $I_e(x, y)$, selection of the step $h_M$ and division of intensity range into intervals $M_i$ with the step $h_M (h_M = 32)$. For each pixel of the image $I_e(x, y)$ is determined an interval involving these pixel values, and appropriate pixel values of the image $N_e(x, y)$ is used to calculate noise dispersion estimation $\sigma^2(i)$ in the given interval $M_i$, herewith, pixel values having edges'map values $E(x, y) = 1$ are removed. By calculating the interval noise dispersion estimation the equation for unbiased dispersion estimation is used

$$\sigma^2(i) = \frac{1}{n_i - 1} \left( \sum_{j=1}^{n_i-1} \left( N_e^i(j) - \overline{N}_e^i \right)^2 \right),$$

where $N_e^i(j)$ pixel values of the noise image $N_e(x, y)$ within the interval $M_i$, $n_i$ - common number of accumulated pixel values of the noise image within the interval $M_i$, $\overline{N}_e^i$ average number of pixel values of the noise image within the interval $M_i$.

At the stage of improving interval dispersion estimations of the $\sigma^2(i)$ for each interval $M_i$ are iteratively removed noise pixels the absolute values of which exceed a threshold equal to three standard noise deviations with the subsequent recalculation of noise dispersion estimation in this interval:

$$N_e^i[k+1] = \left\{ N_e(x,y) \mid \left( N_e(x,y) \in N_e^i[k] \right) \cap \left( |N_e(x,y)| \le 3\sigma(i) \right) \right\},$$

where $N_e^i[k+1]$ - a set of noise pixels within the interval $M_i$ at iteration $k$. In further calculations only those intervals are used where sufficient number of noise pixel values are accumulated (e.g., not less than 500). Besides, those intervals are neglected within which the average value $\overline{N}_e^i$ considerably differs from zero (deviation from zero more than at a half of the step of interval grid $h_M$), since there is a high probability to prevail in such intervals remaining values of non-noise pixels.

The stage of the estimation of noise dispersion dependence on signal intensity on the base of obtained interval noise dispersion estimations resulted in an interpolating tabular function. This tabular function is based on robust local linear approximation of interval dispersion estimations. For this, in the interval grid $M_i$ the step $h_I$ and the approximation radius $r_I$ (that can be dependent on the number of points $n_i$ in the intervals $M_i$) are selected. The values of at the previous stage obtained tabular function are approximated according to the following equation:

$$\hat{\sigma}^2(k \cdot h_I) = a \cdot m_k + b,$$

where $k$ - the number of approximation node; $m_k$ - the center of the interval $M_i(k \cdot h_I)$ ; napannerpbl $a, b$ parameters are calculated from the minimum of the sum of absolute deviations [12]

$$\sum_{j=kh_I-r_I}^{kh_I+r_I} | \hat{\sigma}^2(j) - a \cdot m_j - b | \to \min_{a,b}.$$

This procedure resulted in a table of values $\{M_i(k \cdot h_I), \hat{\sigma}^2(k \cdot h_I)\}$ that undergo interpolation within the range of intensities $[I_{min}, I_{max}]$, i.e. there was obtained an interpolating table for the sought-for noise dispersion dependence on signal intensity.

This stage of noise map creation based on estimated image and interpolating table provides a noise map- an image each pixel of which estimates noise dispersion in an appropriate pixel of the original image.

References:

1. Bosco A., Battiato S., Bruna A.R., Rizzo R. Noise reduction for cfa image sensors exploiting hvs behavior. Sensors 9(3), 1692-1713 (2009).
2. Foi A., Trimeche M., Katkovnik V., Egiazarian K. Practical poissoniangaussian noise modeling and fitting for single-image raw-data. Image Processing, IEEE Transactions on 17, 1737-1754 (October 2008).
3. Foi A. Practical denoising of clipped or overexposed noisy images. Proc. 16th European Signal Process. Conf., EUSIPCO 2008, Lausanne, Switzerland, August 2008.
4. Forstner W. Image preprocessing for feature extraction in digital intensity, color and range images. In Springer Lecture Notes on Earth Sciences, 1998.
5. Gino M. Noise, Noise, Noise. http://www.astrophys-assist.com/educate/noise/noise.htm
6. Hensel M., Lundt B., Pralow T., Grigat R.-R. Robust and Fast Estimation of Signal-Dependent Noise in Medical X-Ray Image Sequences. In Handels, H., et al., ed.: Bildverarbeitung fur die Medizin 2006: Algorithmen, Systeme, Anwendun-gen. Springer (2006) 46-50.
7. Liu C., Szeliski R., Kang S.B., Zitnick C.L., Freeman W.T. Automatic estimation and removal of noise from a single image. IEEE Transactions on Pattern Analysis and Machine Intelligence 30(2), 299(314 (2008).
8. Salmeri M., Mencattini A., Rabottino G., Lojacono R. Signal-dependent Noise Characterization for Mammographic Images Denoising. IMEKO TC4 Symposium (IMEKOTC4 '08), Firenze, Italy, September 2008.
9. Starck J., Murtagh F., Bijaoui A. Image Processing and Data Analysis: The Multiscale Approach. Cambridge University Press, 1998.
10. Waegli B. Investigations into the Noise Characteristics of Digitized Aerial Images. In: Int. Arch. For Photogr. And Remote Sensing, Vol. 32-2, pages 341-348,1998.
11. Яне Б. Цифровая обработка изображений. М., Техносфера, 2007, 583 с.
12.W.H. Press, S.A. Teukolsky, W.T. Vetterling, B.P. Flannery. Numerical Recipes in C: The Art of Scientific Computing, Second Edition. New York: Cambridge University Press, 1992.

**Claims**

1. A method for assessing noise in digital X-ray images comprising the steps of:

    acquiring an original image;
    generating an estimated image by means of low-frequency filtering of the original image;
    generating a noise image as a difference between the original image and the estimated image;
    eliminating noise image pixels corresponding to edges in the original image marked as a binary edge map,
    splitting the intensity range of the estimated image into intervals, herewith each pixel of the estimated image is associated with a certain interval;
    calculating a noise dispersion estimation for each interval using noise image pixels at locations of pixels of the estimated image associated with the respective interval;
    improving noise dispersion estimations by removing outlier noise pixels whose absolute values exceed three times the standard deviation of noise in the interval,
    wherein the binary edge map is obtained by splitting the noise image into two binary images of positive and negative changes, performing morphological processing with operations of erosion and dilation of each of the two binary images, and combining the results using a logical "OR" operation;
    performing a local linear approximation of noise dispersions resulting in a tabular function describing the dependence of noise dispersion on signal intensity;
    and calculating a noise map describing pixel-by-pixel noise dispersion estimation of the original digital image based on the estimated image and the obtained tabular function.

2. Method according to claim 1, wherein the morphological processing with erosion and dilation is performed with the use of masks of size 2x2.

**Patentansprüche**

1. Verfahren zum Bewerten von Rauschen in digitalen Röntgenbildern, das die Schritte umfasst:

   Erfassen eines ursprünglichen Bilds,
   Erzeugen eines geschätzten Bilds durch Niederfrequenzfiltration des ursprünglichen Bilds;
   Erzeugen eines Rauschbilds als Unterschied zwischen dem ursprünglichen Bild und dem geschätzten Bild;
   Eliminieren von Rauschbildpixeln, die Rändern im ursprünglichen Bild entsprechen, als binäre Randkarte markiert,
   Teilen des Intensitätsbereichs des geschätzten Bilds in Intervalle, wodurch jedes Pixel des geschätzten Bilds einem gewissen Intervall zugeordnet wird;
   Berechnen einer Rauschdispersionsschätzung für jedes Intervall unter Verwendung von Rauschbildpixeln an Pixelpositionen des geschätzten Bilds, die dem jeweiligen Intervall zugeordnet sind;
   Verbessern von Rauschdispersionsschätzungen durch Entfernen von Ausreißerrauschpixeln, deren absolute Werte die Standardabweichung des Rauschens im Intervall dreifach überschreiten,
   wobei die binäre Randkarte durch Teilen des Rauschbilds in zwei binäre Bilder von positiven und negativen Veränderungen, Durchführen einer morphologischen Verarbeitung mit Erosions- und Dilationsvorgängen an jedem der zwei binären Bilder
   und Kombinieren der Ergebnisse unter Verwendung eines logischen "OR"-Vorgangs erhalten wird;
   Durchführen einer lokalen linearen Approximation von Rauschdispersionen, die zu einer Tabellenfunktion führt, die die Abhängigkeit der Rauschdispersion von der Signalintensität beschreibt; und
   Berechnen einer Rauschkarte, die eine pixelweise Rauschdispersionsschätzung des ursprünglichen digitalen Bilds auf Basis des geschätzten Bilds und der erhaltenen Tabellenfunktion beschreibt.

2. Verfahren nach Anspruch 1, wobei die morphologische Verarbeitung mit Erosion und Dilation unter Verwendung von Masken mit einer Größe von 2 x 2 durchgeführt wird.

**Revendications**

1. Procédé d'évaluation du bruit dans des images radiographiques numériques, comprenant les étapes suivantes :

   acquisition d'une image initiale ;
   production d'une image estimée au moyen d'un filtrage basse fréquence de l'image initiale ;
   production d'une image de bruit correspondant à la différence entre l'image initiale et l'image estimée ;
   élimination des pixels de l'image de bruit correspondant aux contours de l'image initiale marquée comme carte de contours binaires,
   séparation de la plage d'intensité de l'image estimée en intervalles, chaque pixel de l'image estimée étant associé à un certain intervalle ;
   calcul d'une estimation de la dispersion du bruit pour chaque intervalle au moyen des pixels de l'image de bruit aux emplacements des pixels de l'image estimée associés à l'intervalle en question ;
   amélioration des estimations de la dispersion du bruit par élimination des pixels de bruit aberrant dont la valeur absolue est supérieure à trois fois l'écart-type du bruit dans l'intervalle,
   dans lequel la carte des contours binaires s'obtient en séparant l'image de bruit en deux images binaires de variations positives et négatives, en effectuant un traitement morphologique avec des opérations d'érosion et de dilatation de chacune
   des deux images binaires, et en combinant les résultats à l'aide d'une opération de « OU » logique ;
   en effectuant une approximation linéaire locale des dispersions du bruit résultant en une fonction tableau qui décrit la dépendance de la dispersion du bruit par rapport à l'intensité du signal ;
   et en calculant une carte de bruit décrivant l'estimation de la dispersion du bruit pixel par pixel de l'image numérique initiale à partir de l'image estimée et de la fonction tableau obtenue.

2. Procédé selon la revendication 1, dans lequel le traitement morphologique par érosion et dilatation est effectué au moyen de masques d'une taille de 2x2.

Fig. 1

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **M. SALMERI et al.** Signal-dependent Noise Characterization for Mammographic Images Denoising. *6th IMEKO TC4 Symposion,* 24 September 2008
- **M. HENSEL.** Robust and Fast Estimation of Signal-Dependent Noise in Medical X-Ray image Sequences. *Bildverarbeitung fur die Medizin 2006,* 21 March 2006, 46-50
- **BOSCO A. ; BATTIATO S. ; BRUNA A.R. ; RIZZO R.** Noise reduction for cfa image sensors exploiting hvs behavior. *Sensors,* 2009, vol. 9 (3), 1692-1713
- **FOI A. ; TRIMECHE M. ; KATKOVNIK V. ; EGIAZARIAN K.** Practical poissoniangaussian noise modeling and fitting for single-image raw-data. *Image Processing, IEEE Transactions,* October 2008, vol. 17, 1737-1754
- Practical denoising of clipped or overexposed noisy images. **FOI A.** Proc. 16th European Signal Process. Conf. EUSIPCO 2008, August 2008
- **FORSTNER W.** Image preprocessing for feature extraction in digital intensity, color and range images. *In Springer Lecture Notes on Earth Sciences,* 1998

- Fast Estimation of Signal-Dependent Noise in Medical X-Ray Image Sequences. **HENSEL M. ; LUNDT B. ; PRALOW T. ; GRIGAT R. ; R. ROBUST et al.** Bildverarbeitung fur die Medizin 2006: Algorithmen, Systeme, Anwendun-gen. Springer, 2006, 46-50
- **LIU C. ; SZELISKI R. ; KANG S.B. ; ZITNICK C.L. ; FREEMAN W.T.** Automatic estimation and removal of noise from a single image. *IEEE Transactions on Pattern Analysis and Machine Intelligence,* 2008, vol. 30 (2), 299-314
- **SALMERI M. ; MENCATTINI A. ; RABOTTINO G. ; LOJACONO R.** Signal-dependent Noise Characterization for Mammographic Images Denoising. *IMEKO TC4 Symposium (IMEKOTC4 '08),* September 2008
- **STARCK J. ; MURTAGH F. ; BIJAOUI A.** Image Processing and Data Analysis: The Multiscale Approach. Cambridge University Press, 1998
- **WAEGLI B.** Investigations into the Noise Characteristics of Digitized Aerial Images. In: Int. Arch. For Photogr. *And Remote Sensing,* 1998, vol. 32-2, 341-348
- **W.H. PRESS ; S.A. TEUKOLSKY ; W.T. VETTERLING ; B.P. FLANNERY.** Numerical Recipes in C: The Art of Scientific Computing, Second Edition. Cambridge University Press, 1992